# EUROPEAN PATENT APPLICATION

(11) **EP 4 400 860 A1**
(43) Date of publication of application: **17.07.2024**
(21) Application number: 23151081.9
(22) Date of filing: 11.01.2023
(51) Int. Cl.: G01S 7/35, G01S 7/41, G01S 7/42, G01S 13/34, G01S 13/42, G01S 13/44, G01S 13/58, G01S 13/72, G01S 13/931, G01S 13/02

(54) **AN AUTOMOTIVE RADAR TRANSCEIVER SYSTEM WITH INCREASED ANGULAR SEPARABILITY**

(71) Applicant: Magna Electronics Sweden AB, 447 37 Vårgårda (SE)
(72) Inventor: Marsch, Sebastian, 97464 Niederwerrn (DE); Klotzbuecher, Dirk, 97464 Niederwerrn (DE); Poiger, Walter, 97464 Niederwerrn (DE)
(74) Representative: Westpatent AB

(57) **Abstract**

The present disclosure relates to automotive radar transceiver system (120) comprising a radar transceiver (130) adapted to generate and transmit radar signals, an antenna array (140) and a processing device (150) adapted to process received reflected radar signals received via the antenna array (140). The antenna array (140) comprises a plurality of antenna elements (141) where adjacent antenna elements (141) are separated by a corresponding distance (d₁, d₂, d₃). The processing device (150) is adapted to
- control the radar transceiver (130) to generate and transmit first radar signals (170) in a first frequency band (B1) having a first center frequency (fc1) that corresponds to a first wavelength (λ1) that exceeds two times at least one of said distances (d₁, d₂, d₃).

The processing device (150) is further adapted to
- generate and transmit second radar signals (171) in a second frequency band (B2) having a second center frequency (fc2) that differs from the first center frequency (fc1) and corresponds to a second wavelength (λ2) that exceeds two times at least one of said distances (d₁, d₂, d₃), and to
- determine spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) of determined amplitude peaks (205, 206; 210, 211; 212, 213) in the received reflected signals (172, 173);
- determine which of the spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) that are considered to remain constant for both frequency bands (B1, B2).

## Description

### DESCRIPTION OF THE DISCLOSURE

The present disclosure relates to automotive radar systems, and in particular to radar systems comprising antenna arrays adapted for detecting the bearing to one or more targets in terms of azimuth and/or elevation angle, in addition to detecting range and radial velocity.

Automotive radar systems are under constant development. Ever increasing demands on performance metrics such as radar range and angular resolution drives this development. Some modern automotive radar systems are required to be able to separate relatively small objects from each other, such as motorcycles, which are at the same radial range from the radar transceiver and which move with the same radial velocity. This separation of objects requires a radar system which has sufficient performance in terms of azimuth and/or elevation angle separability. A radar system lacking in angle separability performance may not be able to separate two smaller objects from each other, thus risking that higher layer control functions misinterpret the traffic situation, which is undesired.

The ability to separate targets that are close to each other is very important for automotive sensors, e.g.to realize autonomous driving. This is valid for every domain that a sensor can measure, e.g. Range, Doppler, Azimuth and Elevation for a radar sensor, and becomes more and more important to the angle domain. The angular difference that targets can be maximum close together to each other and still be separately seen is called resolution, and an increased resolution in the angle domain is required.

In order to meet the increasing requirements on angular resolution, radar systems based on large antenna arrays can be used, i.e., antenna arrays spanning over a large aperture and comprising a large number of transmit (Tx) and receive (Rx) antenna elements. Sparse and/or nonuniform antenna arrays can also be used to achieve an increase in angular separability. However, processing the output from such arrays may involve a prohibitive computational load due to the large number of transmit/receive antenna pairs. The hardware cost also increases, which is undesired.

Furthermore, if the highest possible frequency is not sampled at least twice, the Nyquist criterion is not fulfilled. In this case the bearing spectrum is containing grating lobes that can lead to false targets. E.g., if an antenna array has maximum aperture to still enable an unambiguous angle estimate is scaled by factor c, there exist c possible estimates of the bearing angle where only one of them is correct and the others are ambiguities.

There is a need for automotive radar systems with improved angular resolution, which are more efficient in terms of computational complexity and also less costly in terms of signal processing hardware. It is an object of the present disclosure to provide such improved automotive radar systems.

This object is at least in part obtained by an automotive radar transceiver system comprising a radar transceiver adapted to generate and transmit radar signals, an antenna array and a processing device adapted to process received reflected radar signals received via the antenna array. The antenna array comprises a plurality of antenna elements where adjacent antenna elements are separated by a corresponding distance. The processing device is adapted to control the radar transceiver to generate and transmit first radar signals in a first frequency band having a first center frequency that corresponds to a first wavelength that exceeds two times at least one of said distances. The processing device is further adapted to control the radar transceiver to generate and transmit second radar signals in a second frequency band having a second center frequency that differs from the first center frequency and corresponds to a second wavelength that exceeds two times at least one of said distances. The processing device is further adapted to determine spectral positions of determined amplitude peaks in the received reflected signals, and to determine which of the spectral positions that are considered to remain constant for both frequency bands.

Using two or more different center frequencies, the true signal will remain and the grating lobes will differ. This way, it is possible to facilitate an antenna array with high aperture that produces grating lobes where the grating lobes can be differentiated from main beams, which has the advantages of very high resolution and an unambiguous angle estimate.

According to some aspects, the received reflected signals have been reflected by a first target object and a second target object. The determined amplitude peaks, having spectral positions that are considered to remain constant for both frequency bands, correspond to these target objects.

In this manner, the two target objects can be more easily distinguished from each other.

According to some aspects, the processing device is adapted to determine spectral positions of determined amplitude peaks that are considered to remain constant for both frequency bands by determining which amplitude peaks for the first received reflected signal and the second received reflected signal which together have a total maximum amplitude that exceeds their individual maximum amplitudes.

In this manner, the grating lobes that appear can be separated from the real main lobes.

According to some aspects, the spectral positions are in the form of angles in a first amplitude versus angle representation of a first received reflected signal corresponding to the transmitted first radar signals, and a second amplitude versus angle representation of a second received reflected signal, corresponding to the transmitted second radar signals. The angles are either azimuth angles or phase spectrum angles.

According to some aspects, the processing device is adapted to determine the amplitude versus angle representations by transforming a first received reflected signal and the second received reflected signal to a frequency spectrum by a spectrum estimation technique.

This can be a Fast Fourier Transform (FFT) or any other suitable spectrum estimation technique. The spectral positions will then be constituted by azimuth angles or phase spectrum angles.

According to some aspects, the processing device is adapted to determine spectral positions of determined amplitude peaks that are considered to remain constant for both frequency bands by combining the first amplitude versus angle representation) and the second amplitude versus angle representation where the smaller amplitude values are output such that a minimum operator signal is obtained.

According to some aspects, the processing device is adapted to determine a first set of amplitude peaks in the first amplitude versus angle representation, to determine a second set of amplitude peaks in the second amplitude versus angle representation, and to compare the angles of the first set of amplitude peaks with the angles of the second set of amplitude peaks. The processing device is further adapted to determine angular differences between the angles of the first set of amplitude peaks and the angles of the second set of amplitude peaks. When an angular difference between at least a first amplitude peak in the first set of amplitude peaks and at least a second amplitude peak in the second set of amplitude peaks falls below a threshold, being considered to remain constant for both frequency bands, those amplitude peaks are determined to be real amplitude peaks, being different from amplitude peaks related to grating lobes.

In this manner, the grating lobes that appear can be separated from the real main lobes in various manners when a spectrum estimation technique such as FFT has been applied.

According to some aspects, the spectral positions are in the form of amplitude peaks obtained directly from the received reflected signals by means of a Root MUSIC algorithm.

In this way, the spectral positions are determined, such that the grating lobes that appear can be separated from the real main lobes, without the need of an FFT or other spectrum estimation techniques.

There are also disclosed herein vehicles and methods associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in detail with reference to the appended drawings, where:
- Figure 1: schematically illustrates a vehicle with a radar sensor;
- Figure 2: shows an antenna array for target angle estimation;
- Figure 3: shows amplitude versus angle representations for radar signals;
- Figure 4: shows an enlarged part of Figure 3;
- Figure 5: is a flow chart illustrating methods;
- Figure 6: shows an example sensor signal processing system; and
- Figure 7: illustrates an example computer program product.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout. The terminology used herein is for describing aspects of the disclosure only and is not intended to limit the invention. As used herein, the singular forms "a", "an" and "the" are intended to include the plural forms as well, unless the context clearly indicates otherwise.

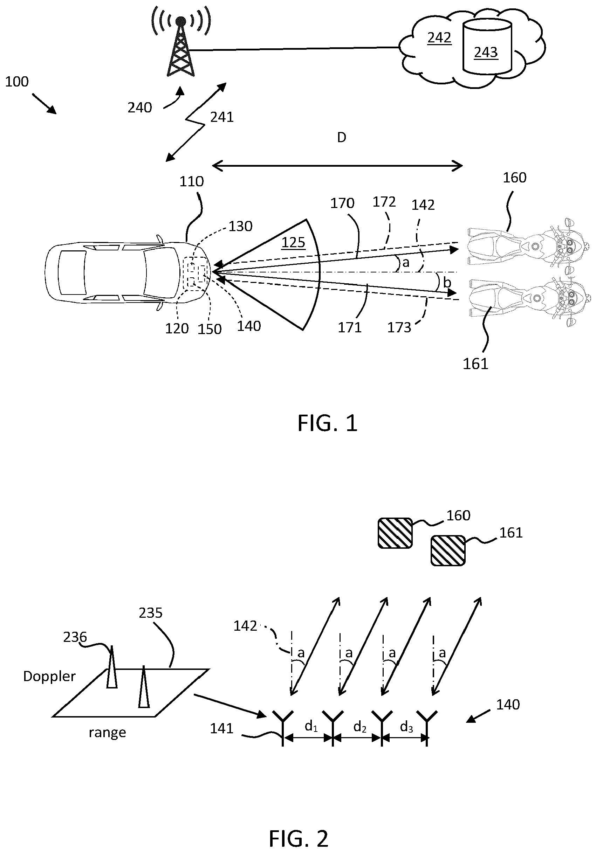

Figure 1 illustrates an example traffic scenario 100 where a vehicle 110 with an automotive radar transceiver system 120 approaches two motorcycles 160, 161. The radar transceiver system 120 is associated with a field of view 125. This example radar transceiver system 120 is a forward looking radar. The techniques disclosed herein are however not limited to forward looking radar systems but can be used also in corner radars and other types of radar systems.

The automotive radar transceiver system 120 comprises a radar transceiver 130 adapted to generate and transmit radar signals, an antenna array 140 and a processing device 150 adapted to process received reflected radar signals received via the antenna array 140. The antenna array 140 comprises a plurality of antenna elements 141, where adjacent antenna elements 141 are separated by a corresponding distance d₁, d₂, d₃.

According to some aspects, the radar transceiver 130 is arranged to generate a frequency modulated continuous wave (FMCW) radar signal over a radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. The radar signals are radiated by means of the antenna array 140.

Given an FMCW radar signal format, the distance D to a target object 160, 161 may be determined based on a first Discrete Fourier Transform (DFT), or Fast Fourier Transform (FFT), and the radial velocity or Doppler frequency may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver system 120. Other spectrum estimation technique are also conceivable.

Due to the limitations of sampling speed, the velocity of the target object is often under-sampled, and this can be corrected by observing movement using a tracker or similar device. A good overview of rudimentary FMCW radar processing is given in the lecture notes "Introduction to mmwave Sensing: FMCW Radars" by Sandeep Rao, Texas Instruments, 2017.

None of the two motorcycles in the example traffic scenario 100 has a large radar cross section (RCS), and they are located at about the same distance D from the radar transceiver system 120. The two motorcycles 160, 161 also move with approximately the same radial velocity with respect to the radar transceiver system 120. Thus, to separate the two target objects 160, 161, it is required to determine the target angles a, b, e.g., with respect to some boresight direction 142 in azimuth and or elevation angle. A radar transceiver which does not have the required angle separability performance will see the two target objects 160, 161 as a single target object unless the distance or radial velocity to one of the target objects change relative to the other target object.

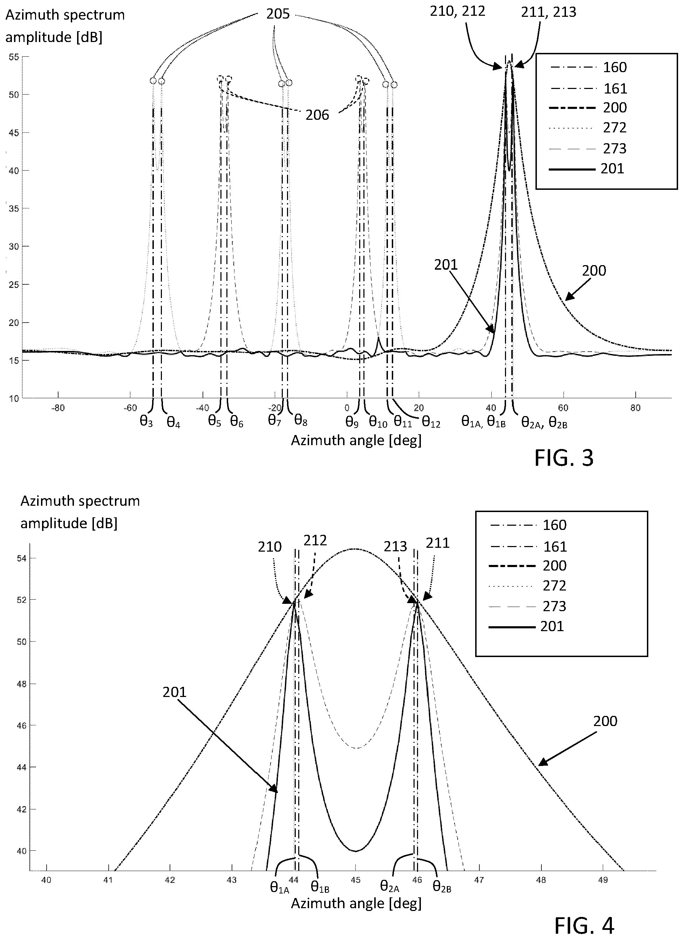

This is illustrated in Figure 3 and Figure 4 where there is an azimuth spectrum amplitude on the y-axis and azimuth angle in degrees on the x-axis. A broad dash-dotted line 200 shows an amplitude versus angle representation for a radar signal where an array antenna comprises adjacent antenna elements 141 are separated by a corresponding distance d₁, d₂, d₃, where the radar signal has a wavelength λ that falls below two times all of said distances d₁, d₂, d₃. In Figure 4, the broad main beam does not admit angular separation of the two target objects 160, 161.

Figure 2 illustrates the example radar transceiver system 120 with the radar transceiver 130 the antenna array 140 and the processing device 150. The antenna array 140 comprises plurality of antenna elements 141 comprising a combination of transmit antennas and receive antennas, and a processing device 150 adapted to process radar signals received via the antenna elements 141. Each pair of transmit antenna and receive antenna in the antenna array 140 gives rise to a respective range-Doppler map 235, indicating received radar signal energy 236 at different distances and radial velocities. Each range-Doppler map cell is a complex value associated with a phase and a magnitude, in a known manner.

An angle a from the antenna array 140 to a target object 160, 161, such as one of the motorcycles in Figure 1, can be determined conveniently by a third FFT - the angle FFT, applied to range-Doppler cells from each range-Doppler map generated by each transmit-antenna pair in the radar sensor array, after appropriate zero-padding. The determination of target angle using an FFT may be realized in many well-known manners.

The processing device 150 is adapted to control the radar transceiver 130 to generate and transmit first radar signals 170 in a first frequency band B1 having a first center frequency fc1 that corresponds to a first wavelength λ1 that exceeds two times at least one of said distances d₁, d₂, d₃.

According to the present disclosure, with reference also to Figure 3 and Figure 4, Figure 4 showing an enlarged part of Figure 3, the processing device 150 is adapted to control the radar transceiver 130 to generate and transmit second radar signals 171 in a second frequency band B2 having a second center frequency fc2 that differs from the first center frequency fc1 and corresponds to a second wavelength λ2 that exceeds two times at least one of said distances d₁, d₂, d₃.

The processing device 150 is further adapted to determine spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ of determined amplitude peaks 205, 206; 210, 211; 212, 213 in the received reflected signals 172, 173, and to determine which of the spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ that are considered to remain constant for both frequency bands B1, B2.

Using two or more different center frequencies, the true signal will remain and the grating lobes will differ. In other words, the azimuth spectrum will have the same amplitude peaks at the true signal positions and different peaks at ambiguous signals, e.g. due to an oversized antenna array 140. This fact is here used to facilitate an antenna array 140 with high aperture that produces grating lobes where the grating lobes can be differentiated from main beams.

This way, it is possible to have very high resolution and an unambiguous angle estimate.

According to some aspects, the received reflected signals 172, 173 have been reflected by a first target object 160 and a second target object 161, where the determined amplitude peaks 210, 211; 212, 213, having spectral positions θ_{1A}, θ_{1B}, θ_{2A}, θ_{2B} that are considered to remain constant for both frequency bands B1, B2, correspond to these target objects 160, 161.

In this. the two target objects can be more easily distinguished from each other.

According to some aspects, the spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ are in the form of angles in a first amplitude versus angle representation 272, indicated with dotted lines in Figure 3 and Figure 4, of a first received reflected signal 172 corresponding to the transmitted first radar signals 170, and a second amplitude versus angle representation 273, indicated with dashed lines in Figure 3 and Figure 4, of a second received reflected signal 173, corresponding to the transmitted second radar signals 171, where the angles either are azimuth angles θ or phase spectrum angles ω. In Figure 3 and Figure 4, the angles are azimuth angles θ.

In Figure 3, in the first amplitude versus angle representation 272, there is a first set of amplitude peaks 205 with corresponding azimuth angle values θ₃, θ₄; θ₇, θ₈; θ₁₁, θ₁₂ emerge for the first radar signal 170 having the first center frequency fc1 and in the second amplitude versus angle representation 273 there is a second set of amplitude peaks 206 with corresponding azimuth angle values θ₅, θ₆; θ₉, θ₁₀ emerge for the second radar signal 171 having the second center frequency fc2 .

In the first set of amplitude peaks 205, there are peaks at azimuth angle values θ₃, θ₇, θ₁₁ which relate to the first target object 160 and azimuth angle values θ₄, θ₈, θ₁₂ which relate to the second target object 161. Correspondingly, in the second set of amplitude peaks 206, there are peaks at azimuth angle values θ₅, θ₉ which relate to the first target object 160 and azimuth angle values θ₆, θ₁₀ which relate to the second target object 161.

The fact that the first set of amplitude peaks 205 have azimuth angle values θ₃, θ₄; θ₇, θ₈; θ₁₁, θ₁₂ which are separated from the azimuth angle values θ₅, θ₆; θ₉, θ₁₀ for the second set of amplitude peaks 206 along the x-axis reveals that these sets of amplitude peaks 205, 206 correspond to grating lobes.

With reference also to Figure 4 that shows an enlarged part of Figure 3, in the first amplitude versus angle representation 272 there is also a third set of amplitude peaks 210, 211 with corresponding azimuth angle values θ_{1A}, θ_{2B} that emerge for the first radar signal 170 having the first center frequency fc1 and in the second amplitude versus angle representation 273 there is a fourth set of amplitude peaks 212, 213 with corresponding azimuth angle values θ_{1B}, θ_{2A} that emerge for the second radar signal 171 having the second center frequency fc. I is to be noted that in Figure 4, the dotted line of the first amplitude versus angle representation 272 is overlaid with a solid line 201 that will be discussed later.

In the third set of amplitude peaks 210, 211, there is a peak 210 at an azimuth angle value θ_{1A} which relates to the first target object 160, and a peak 211 at an azimuth angle value θ_{2B} which relates to the second target object 161. Correspondingly, in the fourth set of amplitude peaks 212, 213, there is a peak 212 at an azimuth angle value θ_{1B} which relates to the first target object 160, and a peak 213 at an azimuth angle values θ_{2A} which relates to the second target object 161.

The fact that the third set of amplitude peaks 210, 211 have azimuth angle values θ_{1A}, θ_{2B} which are at least substantially the same as the azimuth angle values θ_{1B}, θ_{2A} for the fourth set of amplitude peaks 212, 213 along the x-axis reveals that these sets of amplitude peaks 205, 206 correspond to real main lobes. This enables a large antenna aperture which admits a sufficient angular separation between the target objects 160, 161 such that the target objects 160, 161 can be separated from each other. The grating lobes that appear can, according to the present disclosure, be separated from the real main lobes.

The expression considered to remain constant mentioned above means that the spectral positions do not need to remain exactly constant, but may vary slightly as indicated with the angles θ_{1A}, θ_{1B}, θ_{2A}, θ_{2B} for the third set of amplitude peaks 210, 211 and the fourth set of amplitude peaks 212, 213. See also Figure 4 where the angles do not seem to be at the exactly same places for the different frequency bands B1, B2. Practically, the angles are therefore allowed to vary within a certain threshold as realized by the skilled person.

According to some aspects, according to a first example, the processing device 150 is adapted to determine spectral positions θ_{1A}, θ_{1B}, θ_{2A}, θ_{2B} of determined amplitude peaks 210, 211; 212, 213 that are considered to remain constant for both frequency bands B1, B2 by determining which amplitude peaks 210, 211; 212, 213 for the first received reflected signal 172 and the second received reflected signal 173 which together have a total maximum amplitude that exceeds their individual maximum amplitudes.

In this manner, the grating lobes that appear can be separated from the real main lobes.

The spectral positions can be determined both before and after the FFT, i.e., without the need for an FFT. In the example in Figure 3 and Figure 4, the spectral positions are determined as azimuth angle, after the FFT where the received signals are transformed from time to frequency domain. Different types of spectral positions will be discussed below. FFT is only an example, other suitable spectrum estimation techniques are also conceivable.

According to some aspects, the processing device 150 is adapted to determine the amplitude versus angle representations 272, 273 by transforming a first received reflected signal 172 and the second received reflected signal 173 to a frequency spectrum by means of a spectrum estimation technique. This can be a Fast Fourier Transform (FFT) or any other suitable spectrum estimation technique. The spectral positions will then be constituted by azimuth angles θ or phase spectrum angles ω.

According to some aspects, according to a second example, the processing device 150 is adapted to determine spectral positions of determined amplitude peaks 210, 211; 212, 213 that are considered to remain constant for both frequency bands B1, B2 by combining the first amplitude versus angle representation 272 and the second amplitude versus angle representation 273 where the smaller amplitude values are output such that a minimum operator signal 201, indicated by a solid line in Figure 3 and Figure 4, is obtained. The minimum operator signal 201 thus lacks the grating lobes and their amplitude peaks 205, 206, but contains the main beams and their amplitude peaks 210, 211, 212, 213.

According to some aspects, according to a third example, the processing device 150 is adapted to determine a first set of amplitude peaks 205, 210, 211 in the first amplitude versus angle representation 272, to determine a second set of amplitude peaks 206, 212, 213 in the second amplitude versus angle representation 273, and to compare the angles θ_{1A}, θ_{2A}; θ₃, θ₄; θ₇, θ₈; θ₁₁, θ₁₂ of the first set of amplitude peaks 205, 210, 211 with the angles θ_{1B}, θ_{2B}; θ₅, θ₆; θ₉, θ₁₀ of the second set of amplitude peaks 206, 212, 213.

The processing device 150 is further adapted to determine angular differences between the angles θ_{1A}, θ_{2A}; θ₃, θ₄; θ₇, θ₈; θ₁₁, θ₁₂ of the first set of amplitude peaks 205, 210, 211 and the angles θ_{1B}, θ_{2B}; θ₅, θ₆; θ₉, θ₁₀of the second set of amplitude peaks 206, 212, 213, such that when an angular difference between at least a first amplitude peak 210, 211 in the first set of amplitude peaks 205, 210, 211 and at least a second amplitude peak 212, 213 in the second set of amplitude peaks 206, 212, 213 falls below a threshold, being considered to remain constant for both frequency bands B1, B2, those amplitude peaks 210, 211; 212, 213 are determined to be real amplitude peaks, being different from amplitude peaks 205, 206 related to grating lobes.

In this manner, the grating lobes that appear can be separated from the real main lobes.

According to some aspects, the spectral positions are in the form of amplitude peaks obtained directly from the received reflected signals 172, 173 by means of a suitable algorithm, e.g. a Root MUSIC algorithm.

In this way, the spectral positions are determined, such that the grating lobes that appear can be separated from the real main lobes, without the need of an FFT or other spectrum estimation techniques. The Root MUSIC algorithm is only an example, in the art there are other well-known algorithms that do not calculate spectrums but directly estimate frequencies.

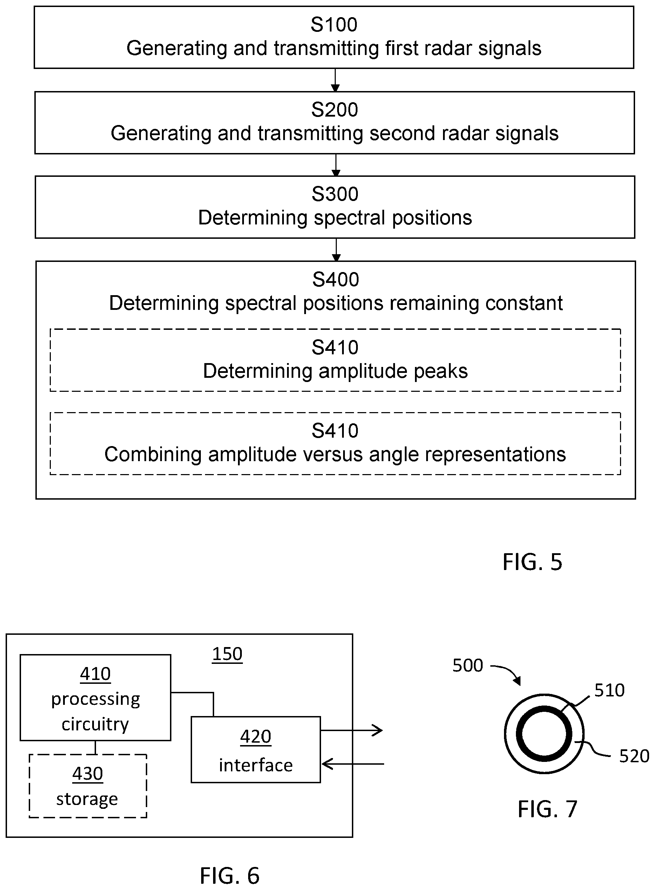

With reference to Figure 5, the present disclosure also relates to a method performed in an automotive radar transceiver system 120 comprising an antenna array 210 and a processing device 230 for processing radar signals received via the antenna array 210. The antenna array 140 having a plurality of antenna elements 141 where adjacent antenna elements 141 are separated by a corresponding distance d₁, d₂, d₃. The method comprises generating and transmitting S100 first radar signals 170 in a first frequency band B1 having a first center frequency fc1 that corresponds to a first wavelength λ1 that exceeds two times at least one of said distances d₁, d₂, d₃. The method further comprises generating and transmitting S200 second radar signals 171 in a second frequency band B2 having a second center frequency fc2 that differs from the first center frequency fc1 and corresponds to a second wavelength λ2 that exceeds two times at least one of said distances d₁, d₂, d₃. The method also comprises determining S300 spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ of determined amplitude peaks 205, 206; 210, 211; 212, 213 in the received reflected signals 172, 173, and determining S400 which of the spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ that are considered to remain constant for both frequency bands B1, B2.

According to some aspects, the received reflected signals 172, 173 have been reflected by a first target object 160 and a second target object 161, and where the determined amplitude peaks 210, 211; 212, 213, having spectral positions θ_{1A}, θ_{1B}, θ_{2A}, θ_{2B} that are considered to remain constant for both frequency bands B1, B2, correspond to these target objects 160, 161.

According to some aspects, the method comprises determining S400 spectral positions θ_{1A}, θ_{1B}, θ_{2A}, θ_{2B} of determined amplitude peaks 210, 211; 212, 213 that are considered to remain constant for both frequency bands B1, B2 by determining S410 which amplitude peaks 210, 211; 212, 213 for the first received reflected signal 172 and the second received reflected signal 173 which together have a total maximum amplitude that exceeds their individual maximum amplitudes.

According to some aspects, the spectral positions θ_{1A}, θ_{1B}, θ_{2A}, θ_{2B}; θ₃, θ₄; θ₅, θ₆; θ₇, θ₈; θ₉, θ₁₀; θ₁₁, θ₁₂ are in the form of angles in a first amplitude versus angle representation 272 of a first received reflected signal 172 corresponding to the transmitted first radar signals 170, and a second amplitude versus angle representation 273 of a second received reflected signal 173, corresponding to the transmitted second radar signals 171, where the angles either are azimuth angles θ or phase spectrum angles ω.

According to some aspects, the method comprises determining S400 spectral positions of determined amplitude peaks 210, 211; 212, 213 that are considered to remain constant for both frequency bands B1, B2 by combining S420 the first amplitude versus angle representation 272 and the second amplitude versus angle representation 273 where the smaller amplitude values are output such that a minimum operator signal 201 is obtained.

According to some aspects, the spectral positions are in the form of amplitude peaks obtained directly from the received reflected signals 172, 173 by means of a Root MUSIC algorithm.

Figure 6 schematically illustrates, in terms of a number of functional units, the components of a radar sensor signal processing system 400 according to an embodiment of the discussions herein. Processing circuitry 410 is provided using any combination of one or more of a suitable central processing unit CPU, multiprocessor, microcontroller, digital signal processor DSP, etc., capable of executing software instructions stored in a computer program product, e.g. in the form of a storage medium 430. The processing circuitry 410 may further be provided as at least one application specific integrated circuit ASIC, or field programmable gate array FPGA. The processing circuitry thus comprises a plurality of digital logic components.

Particularly, the processing circuitry 410 is configured to cause the system 400 to perform a set of operations, or steps. For example, the storage medium 430 may store the set of operations, and the processing circuitry 410 may be configured to retrieve the set of operations from the storage medium 430 to cause the system 400 to perform the set of operations. The set of operations may be provided as a set of executable instructions. Thus, the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The sensor signal processing system 400 further comprises an interface 420 for communications with at least one external device, such as a radar transceiver system 120 and remote servers 243. As such the interface 420 may comprise one or more transmitters and receivers, comprising analogue and digital components and a suitable number of ports for wireline communication.

The processing circuitry 410 controls the general operation of the system 400, e.g. by sending data and control signals to the interface 420 and the storage medium 430, by receiving data and reports from the interface 420, and by retrieving data and instructions from the storage medium 430. Other components, as well as the related functionality, of the control node are omitted in order not to obscure the concepts presented herein.

Figure 7 shows a computer program product 500 comprising computer executable instructions 510 on computer media 520 to execute any of the methods disclosed herein.

The present disclosure is not limited to the above, but may vary freely within the scope of the appended claims. For example, the processing device 150 may be constituted by one central device or by several separate devices that either can be located together or in a more or less distributed manner.

As indicated in Figure 1, according to some aspects, the processing device 150 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 242, such as a remote server 243.

The processing device 150 may be constituted by one or more control unit parts that can be separate from each other. Some or all control unit parts may be comprised in a processing device 150 and/or a remote server 243.

## Claims

1. An automotive radar transceiver system (120) comprising a radar transceiver (130) adapted to generate and transmit radar signals, an antenna array (140) and a processing device (150) adapted to process received reflected radar signals received via the antenna array (140), where the antenna array (140) comprises a plurality of antenna elements (141) where adjacent antenna elements (141) are separated by a corresponding distance (d₁, d₂, d₃), where the processing device (150) is adapted to
- control the radar transceiver (130) to generate and transmit first radar signals (170) in a first frequency band (B1) having a first center frequency (fc1) that corresponds to a first wavelength (λ1) that exceeds two times at least one of said distances (d₁, d₂, d₃),
**characterized in that** the processing device (150) further is adapted to
- control the radar transceiver (130) to generate and transmit second radar signals (171) in a second frequency band (B2) having a second center frequency (fc2) that differs from the first center frequency (fc1) and corresponds to a second wavelength (λ2) that exceeds two times at least one of said distances (d₁, d₂, d₃), and to
- determine spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) of determined amplitude peaks (205, 206; 210, 211; 212, 213) in the received reflected signals (172, 173);
- determine which of the spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) that are considered to remain constant for both frequency bands (B1, B2).

2. The automotive radar transceiver system (120) according to claim 1, wherein the received reflected signals (172, 173) have been reflected by a first target object (160) and a second target object (161), and where the determined amplitude peaks (210, 211; 212, 213), having spectral positions (θ_{1A}, θ_{1B}, θ_{2A}, θ_{2B}) that are considered to remain constant for both frequency bands (B1, B2), correspond to these target objects (160, 161).

3. The automotive radar transceiver system (120) according to any one of the claims 1 or 2, wherein the processing device (150) is adapted to determine spectral positions (θ_{1A}, θ_{1B}, θ_{2A}, θ_{2B}) of determined amplitude peaks (210, 211; 212, 213) that are considered to remain constant for both frequency bands (B1, B2) by determining which amplitude peaks (210, 211; 212, 213) for the first received reflected signal (172) and the second received reflected signal (173) which together have a total maximum amplitude that exceeds their individual maximum amplitudes.

4. The automotive radar transceiver system (120) according to any one of the previous claims, wherein the spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) are in the form of angles in a first amplitude versus angle representation (272) of a first received reflected signal (172) corresponding to the transmitted first radar signals (170), and a second amplitude versus angle representation (273) of a second received reflected signal (173), corresponding to the transmitted second radar signals (171), where the angles either are azimuth angles (θ) or phase spectrum angles (ω).

5. The automotive radar transceiver system (120) according to claim 4, wherein the processing device (150) is adapted to determine the amplitude versus angle representations (272, 273) by transforming a first received reflected signal (172) and the second received reflected signal (173) to a frequency spectrum by a spectrum estimation technique.

6. The automotive radar transceiver system (120) according to any one of the claims 4 or 5, wherein the processing device (150) is adapted to determine spectral positions of determined amplitude peaks (210, 211; 212, 213) that are considered to remain constant for both frequency bands (B1, B2) by combining the first amplitude versus angle representation (272) and the second amplitude versus angle representation (273) where the smaller amplitude values are output such that a minimum operator signal (201) is obtained.

7. The automotive radar transceiver system (120) according to any one of the claims 4-6, wherein the processing device (150) is adapted to
- determine a first set of amplitude peaks (205, 210, 211) in the first amplitude versus angle representation (272),
- determine a second set of amplitude peaks (206, 212, 213) in the second amplitude versus angle representation (273),
- compare the angles (θ_{1A}, θ_{2A}; θ₃, θ₄; θ₇, θ₈; θ₁₁, θ₁₂) of the first set of amplitude peaks (205, 210, 211) with the angles (θ_{1B}, θ_{2B}; θ₅, θ₆; θ₉, θ₁₀) of the second set of amplitude peaks (206, 212, 213), and to
- determine angular differences between the angles (θ_{1A}, θ_{2A}; θ₃, θ₄; θ₇, θ₈; θ₁₁, θ₁₂) of the first set of amplitude peaks (205, 210, 211) and the angles (θ_{1B}, θ_{2B}; θ₅, θ₆; θ₉, θ₁₀) of the second set of amplitude peaks (206, 212, 213), such that when an angular difference between at least a first amplitude peak (210, 211) in the first set of amplitude peaks (205, 210, 211) and at least a second amplitude peak (212, 213) in the second set of amplitude peaks (206, 212, 213) falls below a threshold, being considered to remain constant for both frequency bands (B1, B2), those amplitude peaks (210, 211; 212, 213) are determined to be real amplitude peaks, being different from amplitude peaks (205, 206) related to grating lobes.

8. The automotive radar transceiver system (120) according to any one of the claims 1-3, wherein the spectral positions are in the form of amplitude peaks obtained directly from the received reflected signals (172, 173) by means of a Root MUSIC algorithm.

9. A vehicle (110) comprising the automotive radar transceiver system (120) according to any previous claim.

10. A method performed in an automotive radar transceiver system (120) comprising an antenna array (210) and a processing device (230) for processing radar signals received via the antenna array (210), the antenna array (140) having a plurality of antenna elements (141) where adjacent antenna elements (141) are separated by a corresponding distance (d₁, d₂, d₃), the method comprising:
generating and transmitting (S100) first radar signals (170) in a first frequency band (B1) having a first center frequency (fc1) that corresponds to a first wavelength (λ1) that exceeds two times at least one of said distances (d₁, d₂, d₃),
**characterized in that** the further comprises:
generating and transmitting (S200) second radar signals (171) in a second frequency band (B2) having a second center frequency (fc2) that differs from the first center frequency (fc1) and corresponds to a second wavelength (λ2) that exceeds two times at least one of said distances (d₁, d₂, d₃);
determining (S300) spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) of determined amplitude peaks (205, 206; 210, 211; 212, 213) in the received reflected signals (172, 173); and
determining (S400) which of the spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) that are considered to remain constant for both frequency bands (B1, B2).

11. The method according to claim 10, wherein the received reflected signals (172, 173) have been reflected by a first target object (160) and a second target object (161), and where the determined amplitude peaks (210, 211; 212, 213), having spectral positions (θ_{1A}, θ_{1B}, θ_{2A}, θ_{2B}) that are considered to remain constant for both frequency bands (B1, B2), correspond to these target objects (160, 161).

12. The method according to any one of the claims 10 or 11, wherein the method comprises determining (S400) spectral positions (θ_{1A}, θ_{1B}, θ_{2A}, θ_{2B}) of determined amplitude peaks (210, 211; 212, 213) that are considered to remain constant for both frequency bands (B1, B2) by determining (S410) which amplitude peaks (210, 211; 212, 213) for the first received reflected signal (172) and the second received reflected signal (173) which together have a total maximum amplitude that exceeds their individual maximum amplitudes.

13. The method according to any one of the claims 10-12, wherein the spectral positions (θ_{1A}, θ_{1B}, θ_{2A}, θ_{2B}; θ₃, θ₄; θ₅, θ₆; θ₇, θ₈; θ₉, θ₁₀; θ₁₁, θ₁₂) are in the form of angles in a first amplitude versus angle representation (272) of a first received reflected signal (172) corresponding to the transmitted first radar signals (170), and a second amplitude versus angle representation (273) of a second received reflected signal (173), corresponding to the transmitted second radar signals (171), where the angles either are azimuth angles (θ) or phase spectrum angles (ω).

14. The method according to any one of the claims 12 or 13, wherein the method comprises determining (S400) spectral positions of determined amplitude peaks (210, 211; 212, 213) that are considered to remain constant for both frequency bands (B1, B2) by combining (S420) the first amplitude versus angle representation (272) and the second amplitude versus angle representation (273) where the smaller amplitude values are output such that a minimum operator signal (201) is obtained.

15. The method according to any one of the claims 10-12, wherein the spectral positions are in the form of amplitude peaks obtained directly from the received reflected signals (172, 173) by means of a Root MUSIC algorithm.
